# EUROPEAN PATENT APPLICATION

(11) **EP 3 678 148 A1**
(43) Date of publication of application: **08.07.2020**
(21) Application number: 18894506.7
(22) Date of filing: 30.11.2018
(51) Int. Cl.: H01B 7/02

(54) **ELECTRIC WIRE, METHOD FOR PRODUCING ELECTRIC WIRE AND MASTER BATCH**

(30) Priority: 26.12.2017 US 201762610434 P
(71) Applicant: DAIKIN AMERICA, INC., New York 10962 (US); DAIKIN INDUSTRIES, LTD., Osaka-Shi, Osaka 530-8323 (JP)
(72) Inventor: SIMPSON, Wade Martin, Orangeburg, New York 10962 (US); SAKAMI, Kazuki, Osaka-Shi, Osaka 530-8323 (JP); MURAKAMI, Shinji, Osaka-Shi, Osaka 530-8323 (JP); KAWAHARA, Kazuya, Osaka-Shi, Osaka 530-8323 (JP)
(74) Representative: Hoffmann Eitle
(86) International application number: PCT/JP2018/044146
(87) International publication number: WO 2019/130975

(57) **Abstract**

The present disclosure provides an electric wire having excellent smoothness, appearance, and storage stability. The electric wire includes a core wire and a coating layer covering the core wire. The coating layer contains a fluorine-free resin and a fluorine-containing crystalline polymer. The fluorine-free resin includes at least one selected from the group consisting of polyamide resins, polyolefin resins, and polyvinyl chloride resin. The fluorine-containing crystalline polymer represents 0.5 to 4.0 mass% relative to the fluorine-free resin.

## Description

### TECHNICAL FIELD

The present disclosure relates to electric wires, methods for producing electric wires, and masterbatch.

### BACKGROUND ART

Installation of power cables used in fields such as the telecommunication field and the construction infrastructure field involves insertion of cables into pipes. However, conventional cables have an outer surface with a high coefficient of friction and generate a high resistance when inserted into pipes. Thus, such cables may be damaged during the work, which means poor insertion workability.

In order to solve the above problem, Patent Literature 1 and Patent Literature 2 achieved reduction in coefficient of friction of cables by adding a fatty acid amide such as erucamide or silicone oil during formation of cables and allowing the fatty acid amide or silicone oil to bleed on the surface, thereby improving the smoothness of the cables against pipes.

### CITATION LIST

### - Patent Literature

Patent literature 1: US 2016/0012945 A1
Patent literature 2: JP 2013-251270 A

### SUMMARY OF INVENTION

### - Technical Problem

The present disclosure provides an electric wire having excellent smoothness, appearance, and storage stability.

### - Solution to Problem

The present disclosure relates to an electric wire including a core wire and a coating layer covering the core wire,
the coating layer containing a fluorine-free resin and a fluorine-containing crystalline polymer,
the fluorine-free resin including at least one selected from the group consisting of polyamide resins, polyolefin resins, and polyvinyl chloride resin,
the fluorine-containing crystalline polymer representing 0.5 to 4.0 mass% relative to the fluorine-free resin.

The fluorine-containing crystalline polymer is preferably a melt-fabricable, fluorine-containing crystalline polymer.

The polyamide resins preferably include at least one selected from the group consisting of Polyamide 6, Polyamide 66, and Polyamide 12.

The polyolefin resins preferably include at least one selected from the group consisting of polyethylene and polypropylene.

Preferably, the fluorine-free resin includes a polyamide resin, and the fluorine-containing crystalline polymer has a melting point ranging from the temperature 20°C lower than the melting point of the polyamide resin to the temperature 80°C higher than the melting point of the polyamide resin.

Also, preferably, the fluorine-free resin includes a polyolefin resin, and the fluorine-containing crystalline polymer has a melting point ranging from the temperature 40°C higher than the melting point of the polyolefin resin to the temperature 160°C higher than the melting point of the polyolefin resin.

Also, preferably, the fluorine-free resin includes polyvinyl chloride resin, and the fluorine-containing crystalline polymer has a melting point ranging from 150°C to 300°C.

The present disclosure also relates to a method for producing an electric wire, the method including the steps of:
(1) mixing a masterbatch containing a fluorine-free resin and a fluorine-containing crystalline polymer with a fluorine-free resin to provide a coating composition; and
(2) melt-extruding the coating composition onto a core wire to form a coating layer on the core wire,
the fluorine-free resin including at least one selected from the group consisting of polyamide resins, polyolefin resins, and polyvinyl chloride resin,
the fluorine-containing crystalline polymer in the masterbatch representing 5.0 to 50.0 mass% relative to the fluorine-free resin in the masterbatch,
the fluorine-containing crystalline polymer in the coating layer representing 0.5 to 4.0 mass% relative to the fluorine-free resin in the coating layer.

The present disclosure also relates to a masterbatch for forming a coating layer on a core wire of an electric wire, the masterbatch containing a fluorine-free resin and a fluorine-containing crystalline polymer,
the fluorine-free resin including at least one selected from the group consisting of polyamide resins, polyolefin resins, and polyvinyl chloride resin,
the fluorine-containing crystalline polymer representing 5.0 to 50.0 mass% relative to the fluorine-free resin.

### - Advantageous Effects of Invention

The present disclosure can provide an electric wire having excellent smoothness, appearance, and storage stability.

### BRIEF DESCRIPTION OF THE DRAWINGS

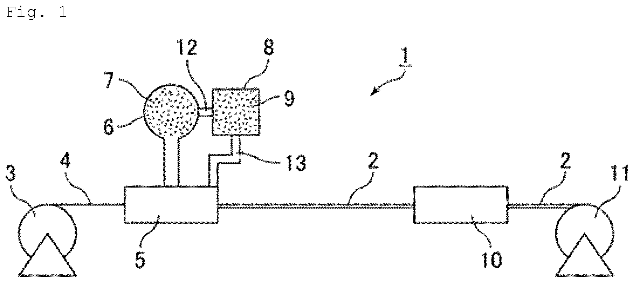

FIG. 1 is a figure showing an example of a device usable in the method for producing an electric wire of the present disclosure.

### DESCRIPTION OF EMBODIMENTS

The present disclosure will be described in detail below.

The present disclosure relates to an electric wire including a core wire and a coating layer covering the core wire. The coating layer contains a fluorine-free resin and a fluorine-containing crystalline polymer. The fluorine-free resin includes at least one selected from the group consisting of polyamide resins, polyolefin resins, and polyvinyl chloride resin. The fluorine-containing crystalline polymer represents 0.5 to 4.0 mass% relative to the fluorine-free resin.

The electric wire of the present disclosure has good surface smoothness, and thus has excellent workability of insertion into (or of removal from) an article such as a pipe.

The electric wire of the present disclosure has a smooth surface, and thus has excellent appearance.

The electric wire of the present disclosure is less likely to suffer bleeding of components from the coating layer, and thus has excellent storage stability. Such reduced bleeding of components can reduce problems such as impairment of tactile sensations of the coating layer (stickiness on the surface) and sticking of such components to electric-wire-forming devices. In contrast, conventional additives such as fatty acid amides and silicone oil usually bleed out after formation of electric wires, and thus may impair tactile sensations of coating layers and may stick to electric-wire-forming devices.

The coating layer contains a fluorine-free resin, and the fluorine-free resin includes at least one selected from the group consisting of polyamide resins, polyolefin resins, and polyvinyl chloride resin.

The polyamide resins, the polyolefin resins, and the polyvinyl chloride resin may be known ones usable as coating materials for electric wires.

The polyamide resins preferably include at least one selected from the group consisting of Polyamide 6, Polyamide 66, and Polyamide 12. Polyamide 6 is particularly preferred.

The polyolefin resins preferably include at least one selected from the group consisting of polyethylene and polypropylene. Examples of the polyethylene include high-density polyethylene (HDPE), medium-density polyethylene (MDPE), low-density polyethylene (LDPE), linear low-density polyethylene (L-LDPE), and very low-density polyethylene (V-LDPE). Preferred among these are low-density polyethylene (LDPE), linear low-density polyethylene (L-LDPE), and very low-density polyethylene (V-LDPE).

The fluorine-free resin is preferably a polyamide resin.

The coating layer contains a fluorine-containing crystalline polymer. Examples of the fluorine-containing crystalline polymer include polytetrafluoroethylene (PTFE), tetrafluoroethylene (TFE)/perfluoro(alkyl vinyl ether) (PAVE) copolymers (PFA), TFE/hexafluoropropylene (HFP) copolymers (FEP), ethylene (Et)/TFE copolymers (ETFE), Et/TFE/HFP copolymers (EFEP), and polyvinylidene fluoride (PVdF) .

The fluorine-containing crystalline polymer preferably has a melting point of 100°C to 360°C, more preferably 140°C to 350°C, still more preferably 160°C to 320°C, particularly preferably 180°C to 300°C.

The term "melting point" herein means the temperature corresponding to the maximum value on a heat-of-fusion curve with a temperature-increasing rate of 10°C/min using a differential scanning calorimeter (DSC).

When the fluorine-free resin is a polyamide resin, the melting point of the fluorine-containing crystalline polymer preferably ranges from the temperature 20°C lower than the melting point of the polyamide resin to the temperature 80°C higher than the melting point of the polyamide resin, more preferably from the temperature 10°C lower than the melting point of the polyamide resin to the temperature 50°C higher than the melting point of the polyamide resin.

When the fluorine-free resin is a polyolefin resin, the melting point of the fluorine-containing crystalline polymer preferably ranges from the temperature 40°C higher than the melting point of the polyolefin resin to the temperature 160°C higher than the melting point of the polyolefin resin, more preferably from the temperature 80°C higher than the melting point of the polyolefin resin to the temperature 160°C higher than the melting point of the polyolefin resin.

When the fluorine-free resin is polyvinyl chloride resin, the melting point of the fluorine-containing crystalline polymer preferably ranges from 150°C to 300°C, more preferably from 190°C to 270°C.

The fluorine-containing crystalline polymer is preferably a melt-fabricable, fluorine-containing crystalline polymer. The term "melt-fabricable" herein means that a polymer can be processed in a molten state using a conventional processing device such as an extruder or an injection molding device.

The melt-fabricable, fluorine-containing crystalline polymer preferably has a melt flow rate (MFR) of 0.1 to 100 g/10 min, more preferably 0.5 to 50 g/10 min.

The MFR herein means the mass (g/10 min) of a polymer flowing out of a nozzle (inner diameter: 2 mm, length: 8 mm) for each 10 minutes at a measurement temperature predetermined in accordance with the type of the fluoropolymer (e.g., 372°C for PFA and FEP, 297°C for ETFE, 380°C for PTFE) and a load predetermined in accordance with the type of the fluoropolymer (e.g., 5 kg for PFA, FEP, ETFE, and PTFE) using a melt indexer in accordance with ASTM D1238.

Examples of the melt-fabricable, fluorine-containing crystalline polymer include the aforementioned PFA, FEP, ETFE, EFEP, and PVdF.

The fluorine-containing crystalline polymer is preferably at least one selected from the group consisting of FEP, ETFE, EFEP, and PVdF, more preferably at least one selected from the group consisting of FEP, ETFE, and EFEP, still more preferably at least one selected from the group consisting of FEP and ETFE, and is most preferably FEP.

The FEP may be any one, and is preferably a copolymer containing a TFE unit and a HFP unit at a TFE/HFP mole ratio of not lower than 70/30 but lower than 99/1. The mole ratio is more preferably not lower than 75/25 and not higher than 98/2, still more preferably not lower than 80/20 and not higher than 95/5. Too small an amount of the TFE unit tends to cause impaired smoothness, while too large an amount thereof tends to cause so high a melting point, possibly resulting in impaired appearance. The FEP is also preferably a copolymer containing 0.1 to 10 mol% of a monomer unit derived from a monomer copolymerizable with TFE and HFP and 90 to 99.9 mol% in total of the TFE unit and the HFP unit. Examples of the monomer copolymerizable with TFE and HFP include PAVE and alkyl perfluorovinyl ether derivatives.

The FEP preferably has a melting point of not lower than 150°C but lower than 324°C, more preferably 200°C to 320°C, still more preferably 210°C to 280°C.

The FEP preferably has a MFR of 0.1 to 100 g/10 min, more preferably 0.5 to 50 g/10 min.

The ETFE is preferably a copolymer containing a TFE unit and an ethylene unit at a TFE/ethylene mole ratio of not lower than 20/80 and not higher than 90/10. The mole ratio is more preferably not lower than 37/63 and not higher than 85/15, still more preferably not lower than 38/62 and not higher than 80/20. The ETFE may be a copolymer containing TFE, ethylene, and a monomer copolymerizable with TFE and ethylene. Examples of the copolymerizable monomer include monomers represented by any of CH₂=CX⁵Rf³, CF₂=CFRf³, CF₂=CFORf³, and CH₂=C(Rf³)₂ (where X⁵ is a hydrogen atom or a fluorine atom; and Rf³ is a fluoroalkyl group which may optionally contain an ether bond). Preferred among these are fluorine-containing vinyl monomers represented by any of CF₂=CFRf³, CF₂=CFORf³, and CH₂=CX⁵Rf³. More preferred are HFP, perfluoro(alkyl vinyl ether) represented by CF₂=CF-ORf⁴ (where Rf⁴ is a C1-C5 perfluoroalkyl group), and fluorine-containing vinyl monomers represented by CH₂=CX⁵Rf³ (where Rf³ is a C1-C8 fluoroalkyl group). The monomer copolymerizable with TFE and ethylene may also be an unsaturated aliphatic carboxylic acid such as itaconic acid or itaconic anhydride. The amount of the monomer copolymerizable with TFE and ethylene is preferably 0.1 to 10 mol%, more preferably 0.1 to 5 mol%, particularly preferably 0.2 to 4 mol%, relative to the fluorine-containing polymer.

The ETFE preferably has a melting point of not lower than 150°C but lower than 324°C, more preferably 200°C to 320°C, still more preferably 210°C to 280°C.

The ETFE preferably has a MFR of 0.1 to 100 g/10 min, more preferably 0.5 to 50 g/10 min.

The amount of each monomer unit in the aforementioned copolymers can be calculated by any appropriate combination of NMR, FT-IR, elemental analysis, and X-ray fluorescence analysis in accordance with the type of the monomer.

The amount of the fluorine-containing crystalline polymer is 0.5 to 4.0 mass% relative to the fluorine-free resin. In order to give much better smoothness, appearance, and storage stability to the electric wire, the amount thereof is preferably 0.5 to 3.0 mass%, more preferably 0.5 to 2.5 mass%, still more preferably 0.5 to 2.0 mass%, particularly preferably 0.5 to 1.5 mass%, relative to the fluorine-free resin.

In order to have much better appearance, the coating layer preferably has a surface roughness (Ra) of 5.0 µm or smaller, more preferably 3.0 µm or smaller, still more preferably 2.0 µm or smaller. The lower limit of the surface roughness may be 0.1 µm.

The surface roughness is a value determined by observing the surface of the coating layer using a laser microscope at 110x magnification.

When the fluorine-free resin is a polyamide resin, the coating layer preferably has a coefficient of static friction on the surface of 0.32 or lower, more preferably 0.29 or lower, still more preferably 0.28 or lower. The lower limit of the coefficient of static friction is preferably as low as possible, and may be 0.01.

When the fluorine-free resin is a polyolefin resin, the coating layer preferably has a coefficient of static friction on the surface of 0.22 or lower, more preferably 0.20 or lower, still more preferably 0.19 or lower. The lower limit of the coefficient of static friction is preferably as low as possible, and may be 0.01.

When the fluorine-free resin is polyvinyl chloride resin, the coating layer preferably has a coefficient of static friction on the surface of 0.36 or lower, more preferably 0.34 or lower, still more preferably 0.32 or lower. The lower limit of the coefficient of static friction is preferably as low as possible, and may be 0.01.

The coating layer having a coefficient of friction within the above range can have much better smoothness.

The coefficient of static friction is a value determined using a surface property tester and a stainless steel plate (1 cm²) serving as a friction element in accordance with ASTM D1894.

The coating layer may have any thickness, and the thickness is preferably 50 µm or greater.

The coating layer may further contain an additional component as appropriate. Examples of the additional component include additives such as crosslinkers, crosslinking aids, antistatics, heat-resistance stabilizers, foaming agents, foam nucleating agents, antioxidants, surfactants, photo-polymerization initiators, abrasion inhibitors, surface modifiers, lubricants, processing aids, ultraviolet stabilizers, flame retardants, plasticizers, filler, photostabilizers, reinforcing agents, impact-resistance improvers, and pigments.

The core wire may be formed of any material having good conductivity. Examples of the material include copper, copper alloys, copper-clad aluminum, aluminum, silver, gold, and zinc-plated iron. The core wire may be a single wire or may be a stranded wire formed by twisting a plurality of single wires.

The core wire may have any shape, such as either round or flat. In the case of a round conductor, the diameter of the core wire may not be particularly limited, and is suitably AWG54 or thicker.

The electric wire of the present disclosure may further include an additional layer, such as an additional resin layer, between the core wire and the coating layer. Further, in order to significantly achieve the aforementioned effects of the electric wire, the coating layer is preferably not covered with an additional layer, in other words, the coating layer is preferably the outermost layer.

The coating layer of the electric wire of the present disclosure may constitute an insulation layer or may constitute a sheath layer.

The electric wire of the present disclosure is suitable for use as a power cable, especially a low voltage power cable. The term "low voltage" herein means 1000 V or lower, preferably 10 to 600 V.

The present disclosure also relates to a method for producing an electric wire. The method includes the steps of: (1) mixing a masterbatch containing a fluorine-free resin and a fluorine-containing crystalline polymer with a fluorine-free resin to provide a coating composition; and (2) melt-extruding the coating composition onto a core wire to form a coating layer on the core wire. The fluorine-free resin includes at least one selected from the group consisting of polyamide resins, polyolefin resins, and polyvinyl chloride resin. The fluorine-containing crystalline polymer in the masterbatch represents 5.0 to 50.0 mass% relative to the fluorine-free resin in the masterbatch. The fluorine-containing crystalline polymer in the coating layer represents 0.5 to 4.0 mass% relative to the fluorine-free resin in the coating layer.

The above production method can favorably provide the aforementioned electric wire of the present disclosure.

The masterbatch used in the step (1) contains a fluorine-free resin and a fluorine-containing crystalline polymer. The fluorine-free resin and the fluorine-containing crystalline polymer may be the same as any of those mentioned respectively as the fluorine-free resin and the fluorine-containing crystalline polymer in the description of the electric wire of the present disclosure, and preferred examples thereof are also the same as those mentioned in the description of the electric wire of the present disclosure.

The amount of the fluorine-containing crystalline polymer in the masterbatch is 5.0 to 50.0 mass%, preferably 8.0 to 40.0 mass%, more preferably 10.0 to 20.0 mass%, relative to the fluorine-free resin in the masterbatch.

The fluorine-containing crystalline polymer used for the masterbatch is preferably in the form of powder having an average particle size of 0.1 to 500.0 µm. This can lead to an electric wire having much better smoothness, appearance, and storage stability. The average particle size is more preferably 1.0 to 50.0 µm, still more preferably 3.0 to 10.0 µm.

The average particle size is the value corresponding to 50% of the cumulative particle size distribution obtained using a laser diffraction particle size analyzer.

The masterbatch may contain an additional component as appropriate. Examples of the additional component include the same as those mentioned as additional components that may be contained in the coating layer of the electric wire of the present disclosure.

The masterbatch may be produced by mixing the fluorine-free resin and the fluorine-containing crystalline polymer optionally together with an additional component as appropriate. This mixing may be performed using a device such as a single- or twin-screw extruder, an open roll mill, a kneader, or a Banbury mixer.

The masterbatch may be in any form such as powder, granules, or pellets, and is preferably in the form of pellets obtained by melt kneading because the fluorine-containing crystalline polymer can remain dispersed finely in the fluorine-free resin.

The temperature for the melt kneading is preferably higher than the melting point of the fluorine-free resin, more preferably 5°C or more higher than the melting point of the fluorine-free resin.

In the step (1), the masterbatch and the fluorine-free resin are mixed to provide a coating composition. The fluorine-free resin mixed with the masterbatch is preferably a fluorine-free resin of the same type as the fluorine-free resin contained in the masterbatch. The masterbatch and the fluorine-free resin are mixed at a ratio such that the amount of the fluorine-containing crystalline polymer in the coating layer of the resulting electric wire is 0.5 to 4.0 mass% relative to the fluorine-free resin of the coating layer.

The mixing of the masterbatch and the fluorine-free resin may be performed by a known method. An additional component may be mixed therewith as appropriate. Examples of the additional component include the same as those mentioned as additional components that may be contained in the coating layer of the electric wire of the present disclosure.

In the step (2), the coating composition is melt-extruded onto a core wire, so that a coating layer is formed on the core wire. Examples of the core wire include the same as those usable for the electric wire of the present disclosure.

The melt extrusion may be performed using a known extruder such as a single- or twin-screw extruder. The temperature for the melt extrusion is preferably not lower than the melting point of the fluorine-free resin and not higher than 320°C, more preferably not higher than 300°C.

FIG. 1 shows an example of a device usable in the method for producing an electric wire of the present disclosure. A device 1 for producing an electric wire 2 includes a reel 3 configured to supply a core wire 4 to an extrusion head 5, a tank 6 for a fluorine-free resin 7, a tank 8 for a masterbatch 9 to be mixed with the fluorine-free resin 7, a cooling box 10 configured to cool the outer surface of a mixture of the fluorine-free resin 7 and the masterbatch 9 (coating composition) in a molten or semisolid state on the core wire 4, and a reel 11 configured to take up the resulting electric wire 2.

Further, as shown in FIG. 1, the tank 8 is provided with a section 12 through which the masterbatch 9 is allowed to pass into the tank 6 for mixing with the fluorine-free resin 7 and a section 13 configured to introduce the masterbatch 9 directly into the extrusion head 5 after the fluorine-free resin 7 is introduced into the extrusion head 5.

The present disclosure also relates to a masterbatch for forming a coating layer on a core wire of an electric wire. The masterbatch contains a fluorine-free resin and a fluorine-containing crystalline polymer. The fluorine-free resin includes at least one selected from the group consisting of polyamide resins, polyolefin resins, and polyvinyl chloride resin. The fluorine-containing crystalline polymer represents 5.0 to 50.0 mass% relative to the fluorine-free resin.

The fluorine-free resin and the fluorine-containing crystalline polymer contained in the masterbatch of the present disclosure may be the same as any of those mentioned respectively as the fluorine-free resin and the fluorine-containing crystalline polymer in the description of the electric wire of the present disclosure (or the masterbatch used in the method for producing an electric wire of the present disclosure), and preferred examples thereof are also the same as those mentioned in the description of the electric wire of the present disclosure.

The amount of the fluorine-containing crystalline polymer in the masterbatch is 5.0 to 50.0 mass%, preferably 8.0 to 40.0 mass%, more preferably 10.0 to 20.0 mass%, relative to the fluorine-free resin in the masterbatch.

The fluorine-containing crystalline polymer used for the masterbatch is preferably in the form of powder having an average particle size of 0.1 to 500.0 µm. This can lead to an electric wire having much better smoothness, appearance, and storage stability. The average particle size is more preferably 1.0 to 50.0 µm, still more preferably 3.0 to 10.0 µm.

The average particle size is the value corresponding to 50% of the cumulative particle size distribution obtained using a laser diffraction particle size analyzer.

The masterbatch may contain an additional component as appropriate. Examples of the additional component include the same as those mentioned as additional components that may be contained in the coating layer of the electric wire of the present disclosure.

The masterbatch may be produced by mixing the fluorine-free resin and the fluorine-containing crystalline polymer optionally together with an additional component as appropriate. This mixing may be performed using a device such as a single- or twin-screw extruder, an open roll mill, a kneader, or a Banbury mixer.

The masterbatch may be in any form such as powder, granules, or pellets, and is preferably in the form of pellets obtained by melt kneading because the fluorine-containing crystalline polymer can remain dispersed finely in the fluorine-free resin.

The temperature for the melt kneading is preferably higher than the melting point of the fluorine-free resin, and is more preferably 5°C or more higher than the melting point of the fluorine-free resin.

The masterbatch of the present disclosure is suitable for use in production of the aforementioned electric wire of the present disclosure. For example, the masterbatch of the present disclosure is suitable for use as the masterbatch in the step (1) of the aforementioned method for producing an electric wire of the present disclosure.

### EXAMPLES

The present disclosure will be more specifically described hereinbelow with reference to examples, but the disclosure is not limited thereto.

The respective parameters in the following examples and comparative examples were determined as follows.

### (Melting point)

The melting point was defined as the temperature corresponding to the maximum value on a heat-of-fusion curve with a temperature-increasing rate of 10°C/min using a DSC device (Seiko Instruments Inc.).

### (Average particle size)

The average particle size was defined as the value corresponding to 50% of the cumulative particle size distribution obtained using a laser diffraction particle size analyzer.

The materials used in the following examples and comparative examples were as follows.

### (Fluorine-free resin (base resin))

- Polyamide: Ultramid(R) B29 HM 01, BASF (melting point: 220°C)
- Polyethylene: NUC-9060, NUC Corp. (melting point: 109°C)
- Polyvinyl chloride: Kane Ace 1003N, Kaneka Corp. (average degree of polymerization: 1300)
- Plasticizer: diisononyl phthalate (DINP)
- Thermal stabilizer: ADK STAB RUP-109, Adeka Corp.
- Flame retardant: SZB-2335, Sakai Chemical Industry Co., Ltd.

### (Fluorine-containing polymer)

- PTFE: low molecular weight PTFE Lubron L5F, Daikin Industries, Ltd.
- PFA: NEOFLON PFA AD-2, Daikin Industries, Ltd.
- FEP: NEOFLON FEP NP-20, Daikin Industries, Ltd. low melting point FEP (melting point: 225°C)
- ETFE: NEOFLON ETFE EP-521, Daikin Industries, Ltd. NEOFLON ETFE EP-620, Daikin Industries, Ltd.
- EFEP: NEOFLON EFEP RP-5000, Daikin Industries, Ltd.
- PVdF: KF-7200, Kureha Corp.

The PFA, FEP, ETFE, EFEP, and PVdF were pulverized so as to have an average particle size of 20 µm.

For NP-20, a pulverized matter having an average particle size of 5 µm was also prepared by the same pulverizing method.

Table 1 shows the melting points and average particle sizes of the fluorine-containing polymers.

**[Table 1]**

| | F polymer | | | | | | | |
|---|---|---|---|---|---|---|---|---|
| F poylemr | PTFE | PFA | FEP | | ETFE | | EFEP | PVdF |
| | L5F | AD-2 | NP-20 | Low melting point FEP | EP-521 | EP-620 | R P-5000 | KF-7200 |
| Melting point (°C) | 329 | 313 | 264 | 225 | 263 | 220 | 202 | 173 |
| Average particle size (µm) | 2 | 20 | 20 and 5 | 20 | 20 | 20 | 20 | 20 |

### (Silicone oil)

Silicone oil: SH200-1000CS, Dow Corning Toray Co., Ltd. (weight average molecular weight: 1,000 to 10,000)

With the respective base resins, samples of the examples and comparative examples were prepared as follows.

### (Polyamide)

### (Preparation of masterbatch)

One of the fluorine-containing polymers or silicone oil was mixed with Polyamide 6 (B29 HM 01, BASF) such that the amount of the fluorine-containing polymer or silicone oil was 20 wt% relative to 100 parts by weight of Polyamide 6. The mixture was processed in a twin-screw extruder (Labo Plastomill 30C150, Toyo Seiki Seisaku-sho, Ltd.) at a screw rotation speed of 100 rpm, whereby pellets containing the fluorine-containing polymer or silicone oil was prepared. The temperature conditions for extrusion were as follows.
- Cylinder temperature: 230°C, 240°C, and 250°C
- Die temperature: 250°C

### (Preparation of strand)

Polyamide 6 (B29 HM 01, BASF) and the masterbatch prepared above were mixed such that the amount of the fluorine-containing polymer or silicone oil was as shown in Table 2 relative to 100 parts by weight of the polyamide. The mixture was processed in a twin-screw extruder (Labo Plastomill 30C150, Toyo Seiki Seisaku-sho, Ltd.), whereby a strand was prepared. The temperature conditions for extrusion and the screw rotation speed were as follows.
- Cylinder temperature: 230°C, 240°C, and 250°C
- Die temperature: 270°C
- Screw rotation speed: 10 rpm

### (Polyethylene)

### (Preparation of masterbatch)

One of the fluorine-containing polymers or silicone oil was mixed with polyethylene (NUC-9060, NUC Corp.) such that the amount of the fluorine-containing polymer or silicone oil was 20 wt% relative to 100 parts by weight of the polyethylene. The mixture was processed in a twin-screw extruder (Labo Plastomill 30C150, Toyo Seiki Seisaku-sho, Ltd.) at a screw rotation speed of 100 rpm, whereby pellets containing the fluorine-containing polymer or silicone oil was prepared. The temperature conditions for extrusion were as follows.
- Cylinder temperature: 200°C, 200°C, and 200°C
- Die temperature: 200°C

### (Preparation of strand)

Polyethylene (NUC-9060, NUC Corp.) and the masterbatch prepared above were mixed such that the amount of the fluorine-containing polymer or silicone oil was as shown in Table 3 relative to 100 parts by weight of the polyethylene. The mixture was processed in a twin-screw extruder (Labo Plastomill 30C150, Toyo Seiki Seisaku-sho, Ltd.), whereby a strand was prepared. The temperature conditions for extrusion and the screw rotation speed were as follows.
- Cylinder temperature: 200°C, 200°C, and 210°C
- Die temperature: 220°C
- Screw rotation speed: 10 rpm

### (Polyvinyl chloride)

### (Preparation of strand)

Polyvinyl chloride (Kane Ace 1003N, Kaneka Corp.), a plasticizer (DINP), a thermal stabilizer (ADK STAB RUP-109, Adeka Corp.), a flame retardant (SZB-2335, Sakai Chemical Industry Co., Ltd.), and one of the fluorine-containing polymers or silicone oil were mixed such that the amounts thereof were as shown in Table 4 relative to 100 parts by weight of the polyvinyl chloride. The mixture was then kneaded (roll temperature: 160°C, 5 minutes) and the kneaded product was cut into pellets. The pellets were processed in a twin-screw extruder (Labo Plastomill 30C150, Toyo Seiki Seisaku-sho, Ltd.), whereby a strand was prepared. The temperature conditions for extrusion and the screw rotation speed were as follows.
- Cylinder temperature: 160°C, 170°C, and 180°C
- Die temperature: 180°C
- Screw rotation speed: 10 rpm

For the samples produced above, the coefficient of static friction, the workability of insertion into a pipe, the surface roughness Ra, the appearance, and the storage stability were determined or evaluated as follows. The results are shown in Tables 2 to 4.

### (Coefficient of static friction)

The coefficient of static friction was determined using a surface property tester and a stainless steel plate (1 cm²) serving as a friction element in accordance with ASTM D1894.

### (Workability of insertion into pipe)

When the base resin was polyamide, the cases where the coefficient of static friction was 0.28 or lower were evaluated as excellent, higher than 0.28 and not higher than 0.32 as good, and higher than 0.32 as poor.

When the base resin was polyethylene, the cases where the coefficient of static friction was 0.20 or lower were evaluated as excellent, higher than 0.20 and not higher than 0.22 as good, and higher than 0.22 as poor.

When the base resin was polyvinyl chloride, the cases where coefficient of static friction was 0.32 or lower were evaluated as excellent, higher than 0.32 and not higher than 0.36 as good, and higher than 0.36 as poor.

### (Surface roughness Ra)

The surface roughness Ra (unit: µm) was determined by observing the surface of each sample using a laser microscope (Keyence Corp.) at 110x magnification.

### (Appearance)

The cases where the surface roughness Ra was 2.0 µm or smaller were evaluated as excellent, higher than 2.0 and not higher than 5.0 µm as good, and greater than 5.0 µm as poor.

### (Storage stability)

The samples were stored at room temperature for 24 hours. Then, the surfaces thereof were touched with a hand, and samples without stickiness on the surface were evaluated as good, while samples with stickiness on the surface were evaluated as poor.

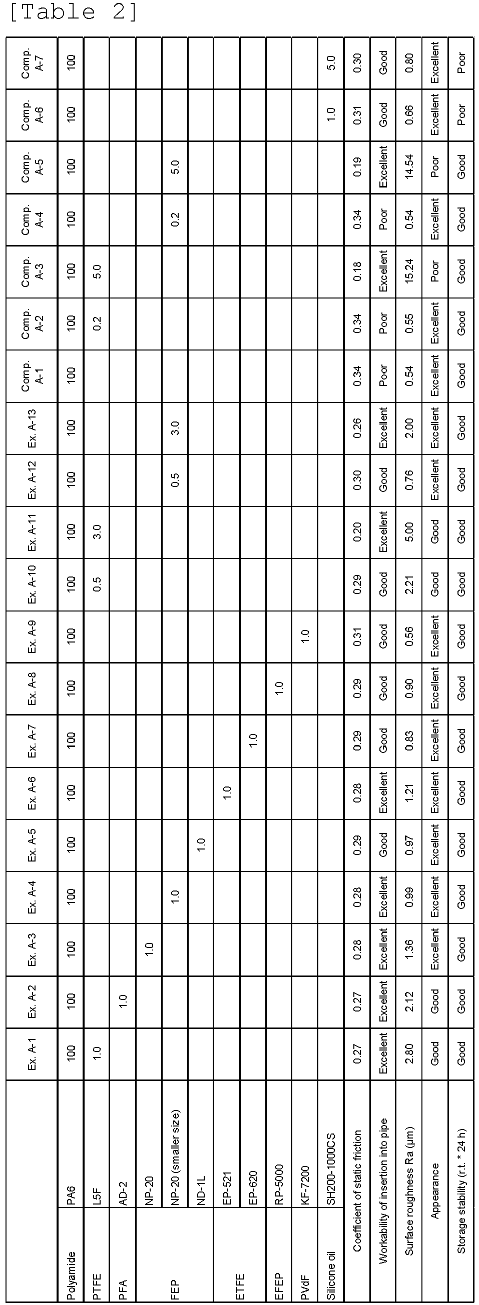

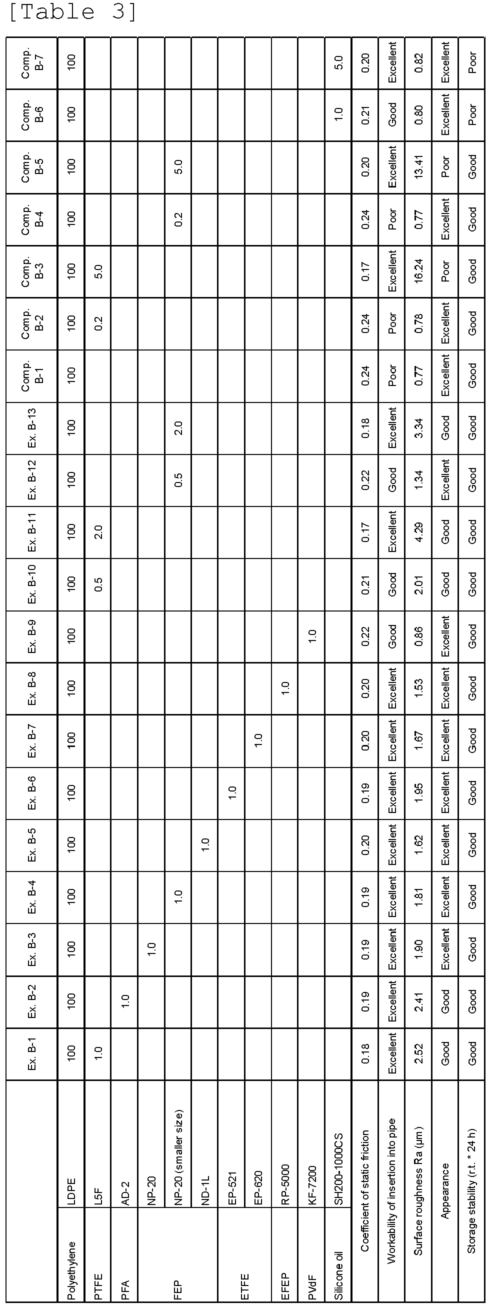

**[Table 4]**

| | | Ex. C-1 | Ex. C-2 | Ex. C-3 | Ex. C-4 | Comp. C-1 | Comp. C-2 | Comp C-3 | Comp. C-4 |
|---|---|---|---|---|---|---|---|---|---|
| PVC | 1003N | 100 | 100 | 100 | 100 | 100 | 100 | 100 | 100 |
| Plasticizer | DINP | 50 | 50 | 50 | 40 | 50 | 50 | 50 | 50 |
| Thermal stabilizer | RUP-109 | 5 | 5 | 5 | 5 | 5 | 5 | 5 | 5 |
| Flame retardant | SZB-2335 | 10 | 10 | 10 | 10 | 10 | 10 | 10 | 10 |
| PTFE | L5F | 1.0 | | | | | | | |
| FEP | NP-20 (smaller size) | | 1.0 | | | | | | |
| ETFE | EP-620 | | | 1.0 | 2.0 | | 0.2 | 5.0 | |
| Silicone oil | SH200-1000CS | | | | | | | | 5.0 |
| Coefficient of static friction | | 0.34 | 0.35 | 0.35 | 0.32 | 0.39 | 0.39 | 0.30 | 0.34 |
| Workability of insertion into pipe | | Good | Good | Good | Excellent | Poor | Poor | Excellent | Good |
| Surface roughness Ra (µm) | | 2.92 | 1.88 | 1.80 | 2.45 | 1.71 | 1.72 | 7.21 | 1.84 |
| Appearance | | Good | Excellent | Excellent | Good | Excellent | Excellent | Poor | Excellent |
| Storage stability (r.t. * 24 h) | | Good | Good | Good | Good | Good | Good | Good | Poor |

## Claims

1. An electric wire comprising
a core wire and a coating layer covering the core wire,
the coating layer containing a fluorine-free resin and a fluorine-containing crystalline polymer,
the fluorine-free resin including at least one selected from the group consisting of polyamide resins, polyolefin resins, and polyvinyl chloride resin,
the fluorine-containing crystalline polymer representing 0.5 to 4.0 mass% relative to the fluorine-free resin.

2. The electric wire according to claim 1,
wherein the fluorine-containing crystalline polymer is a melt-fabricable, fluorine-containing crystalline polymer.

3. The electric wire according to claim 1 or 2,
wherein the polyamide resins include at least one selected from the group consisting of Polyamide 6, Polyamide 66, and Polyamide 12.

4. The electric wire according to claim 1, 2, or 3,
wherein the polyolefin resins include at least one selected from the group consisting of polyethylene and polypropylene.

5. The electric wire according to claim 1, 2, 3, or 4,
wherein the fluorine-free resin includes a polyamide resin, and the fluorine-containing crystalline polymer has a melting point ranging from the temperature 20°C lower than the melting point of the polyamide resin to the temperature 80°C higher than the melting point of the polyamide resin.

6. The electric wire according to claim 1, 2, 3, or 4,
wherein the fluorine-free resin includes a polyolefin resin, and the fluorine-containing crystalline polymer has a melting point ranging from the temperature 40°C higher than the melting point of the polyolefin resin to the temperature 160°C higher than the melting point of the polyolefin resin.

7. The electric wire according to claim 1, 2, 3, or 4,
wherein the fluorine-free resin includes polyvinyl chloride resin, and the fluorine-containing crystalline polymer has a melting point ranging from 150°C to 300°C.

8. A method for producing an electric wire, the method comprising the steps of:
(1) mixing a masterbatch containing a fluorine-free resin and a fluorine-containing crystalline polymer with a fluorine-free resin to provide a coating composition; and
(2) melt-extruding the coating composition onto a core wire to form a coating layer on the core wire,
the fluorine-free resin including at least one selected from the group consisting of polyamide resins, polyolefin resins, and polyvinyl chloride resin,
the fluorine-containing crystalline polymer in the masterbatch representing 5.0 to 50.0 mass% relative to the fluorine-free resin in the masterbatch,
the fluorine-containing crystalline polymer in the coating layer representing 0.5 to 4.0 mass% relative to the fluorine-free resin in the coating layer.

9. A masterbatch for forming a coating layer on a core wire of an electric wire, the masterbatch comprising
a fluorine-free resin and a fluorine-containing crystalline polymer,
the fluorine-free resin including at least one selected from the group consisting of polyamide resins, polyolefin resins, and polyvinyl chloride resin,
the fluorine-containing crystalline polymer representing 5.0 to 50.0 mass% relative to the fluorine-free resin.
